# EUROPEAN PATENT APPLICATION

(11) **EP 3 466 751 A1**
(43) Date of publication of application: **10.04.2019**
(21) Application number: 18198431.1
(22) Date of filing: 03.10.2018
(51) Int. Cl.: B60N 2/02, A47C 3/18, B60N 2/14, B60N 2/42

(54) **DEVICE FOR ROTATING VEHICLE SEATS**

(30) Priority: 06.10.2017 IT 201700112352
(71) Applicant: Isringhausen S.p.A., 28060 San Pietro Mosezzo NO (IT)
(72) Inventor: TURLETTI, Massimo, 28060 San Pietro Mosezzo (IT)
(74) Representative: Premru, Rok

(57) **Abstract**

There is disclosed herein a device (10) for rotating vehicle seats, comprising
a) a first plate (1) or lower plate, which is designed to be connected to the floor of a vehicle;
b) a second plate (1) or upper plate, for supporting a seat;
b1) wherein said first and second plates (1, 2) extend on two substantially and/or generally parallel planes (PI, P2);
b2) wherein said second plate (2) can rotate relative to said first plate (1) about an axis of rotation (Z) that is substantially and/or generally orthogonal to said planes (P1, P2);
c) a rotation lock member (4) for locking the rotation of said second plate (2) relative to said first plate (1) in first and second operating positions;
c1) wherein the actuation of said lock member does not change the distance between said first and said second plates (1, 2);
characterized in that it includes
c) a stroke limiter (31, 32, 33) for adjusting the rotation stroke α of said second plate (2) relative to said first plate (1) about said axis of rotation (Z), said stroke being 180°≤α<360°;
e) a safety member (5) for mechanically connecting said first and said second plates (1, 2) to each other, when said second plate (2) is in said first operating position relative to said first plate (1), to oppose a force that would move said two plates (1, 2) away from each other;
el) said safety member (5) comprising at least one rotating hook (51) mechanically connected to a plate (2; 1) and adapted to connect to a stop member (52) that is joined to the other of said two plates (1; 2).
f) a mechanism (6) for simultaneously actuating the release of said rotation lock member (4), which prevents said first and second plates (1, 2) from rotating relative to each other, and said safety member (5) that opposes the movement of said first and second plates (1, 2) away from each other.

## Description

There is disclosed herein a device for rotating the seat of a vehicle e.g. a motor vehicle.

The use of swiveling seats is known in the field of vehicles, e.g. land transport motor vehicles.

Namely, the front seats of motor vehicles are known to be equipped with devices allowing the seats to rotate about a vertical axis.

The possibility to rotate the seat affords a number of advantages.

For example, when the vehicle is stationary, the passengers that sit on the front seats may turn opposite to the direction of travel to make use of the rear space in the passenger compartment and see the passengers that sit on the rear seats.

In addition, by rotating the seat toward the door, access to the passenger compartment may be facilitated for people with impaired mobility.

A number of different solutions are currently available to allow rotation of a vehicle seat.

Generally, all prior art devices provide a first element, or lower element, which has a substantially and/or generally plate-like shape, and is mechanically connected to the floor of the vehicle, and a second element, or upper element, which has a substantially and/or generally plate-like shape, and has the seat mechanically connected thereto.

The second element will be able to rotate relative to the first element about an axis perpendicular to the planes on which the two plate-like elements extend.

In case of rear-end collision, the upper element of the seat-rotating device will tend to detach from the lower element, which will involve a serious safety hazard for the person sitting on the seat.

This problem has already been addressed in the past.

EP 3 057 825 B1 (Johnson Control) discloses a rotational device comprising two plates, which are rotatably coupled to each other and shaped with two arched portions; the upper plate is provided has a hook that encircles the edge of the arched portion of the bottom plate, to thereby prevent detachment of one plate from the other.

US 5 531 221 (Thoman) provides a lower element with support feet, which has a flat annulus-shaped portion with an annular slide guide fitted therein and rigidly joined to a rotatable upper plate.

Bolts are provided for joining the upper plate to a flange located under the annulus, to prevent detachment of the upper plate in case of a rear-end collision.

US 9 555 723 (Johnson Control) discloses a turning device which comprises locking devices to prevent the upper plate from moving away from the lower plate.

The locking system comprises a receiving element, which in turn comprises at least one spring.

DE 10 2012 112 524 B4 (GM) discloses a rotational device comprising a removable pin which acts as a safety part in case of collision.

EP 2 460 684 B1 (Keiper) discloses a turning device which comprises safety screws preventing the upper plate from moving away from the lower plate.

GB 2 413 761 (Nissan Technical Center Europe) discloses a device for rotating a child seat.

In a possible embodiment the rotational device as disclosed in GB 2 413 761 comprises a stationary element having the shape of an open cylindrical container, which is rigidly joined to the floor of a vehicle and a rotating element, that fits in the underlying open cylindrical container that is rigidly joined to a seat.

The rotating plate is supported by rocker cams and has pins adapted to fit into holes formed in a flange of the open cylindrical container, to lock its rotation.

The rotation of the cams will cause the plate to descend, thereby disengaging and rotating it.

All prior art solutions have certain drawbacks.

For instance, in the aforementioned solution provided by GB 2 413 761 the seat must be lowered to be rotated and lifted to be locked.

The present inventor proposes a device for rotating vehicle seats, which solves at least some of the problems of the prior art.

Namely, the present inventor provides a device for rotating seats that has a light weight, a low cost and is easily fabricated, while affording a high degree of safety even in case of strong stresses, such as those that occur in case of rear-end collision.

A possible embodiment of a device for rotating vehicle seats will be now described with reference to the accompanying drawings in which:

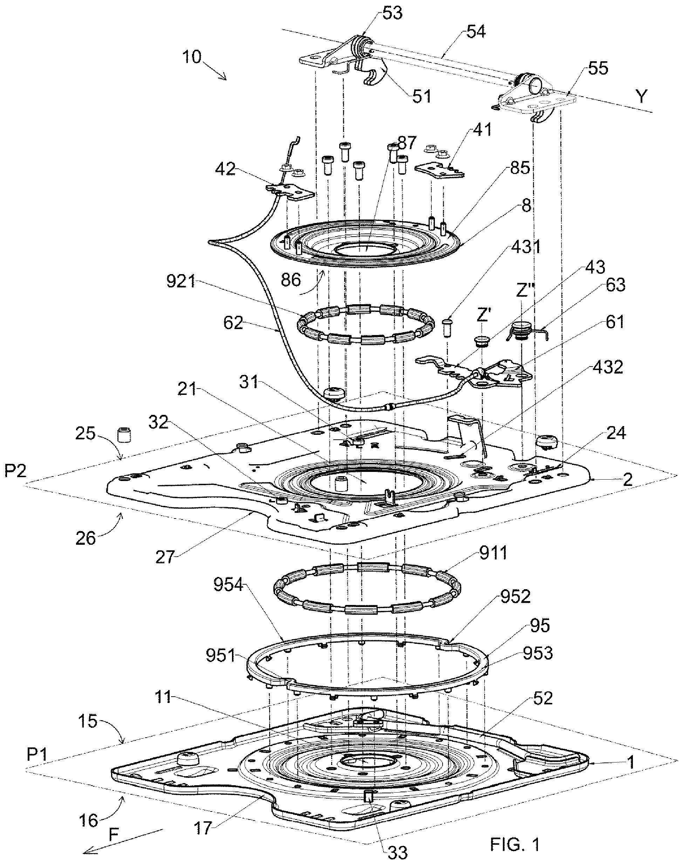

- Figure 1 is an exploded perspective view of a device for rotating vehicle seats.

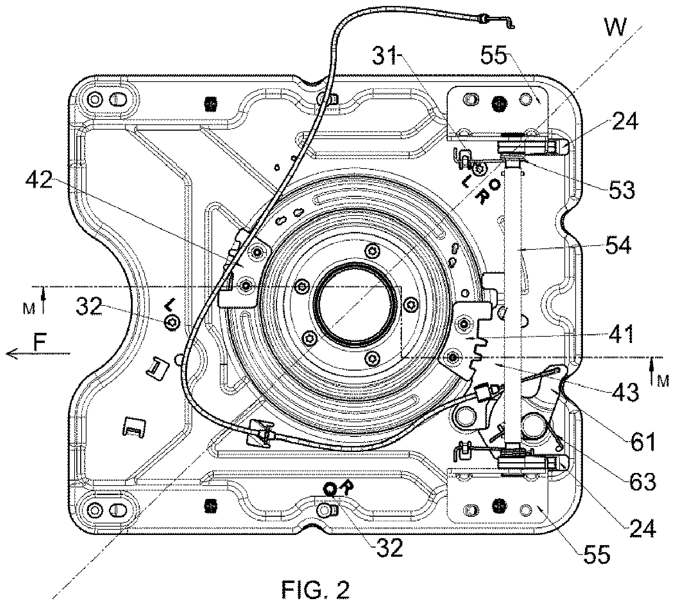

- Figure 2 is a plan view of the device of figure 1, with the seat oriented in the direction of travel of the vehicle;

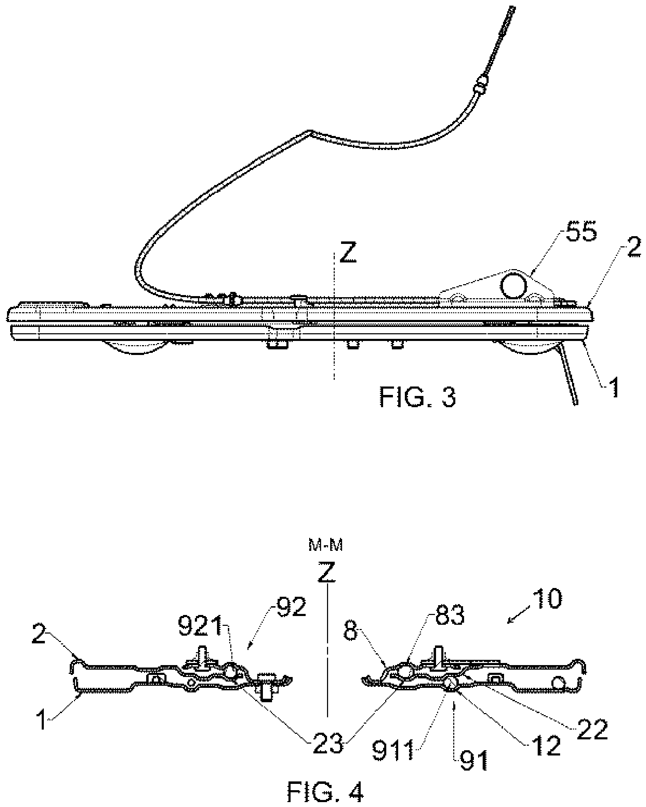

- Figure 3 is a side view of the device of Figure 1;
- Figure 4 is a sectional side view of the device of Figure 1;

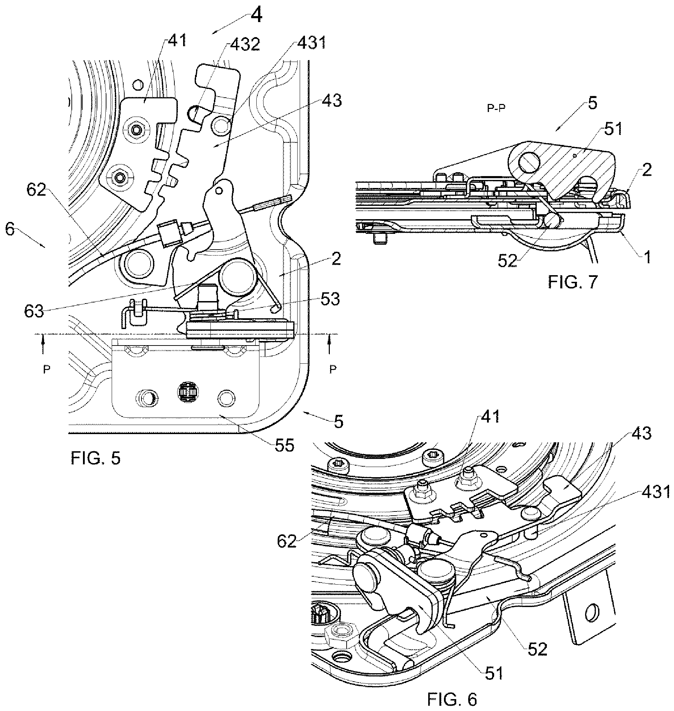

- Figure 5 shows a detail of the view of Figure 1 in a first operating state, i.e. with the rotary device is free to rotate;
- Figure 6 is a perspective view of a detail of Figure 1, with the rotary device in the first operating state;
- Figure 7 is a sectional side view of a detail of the device of Figure 1, with the rotary device in the first operating state;

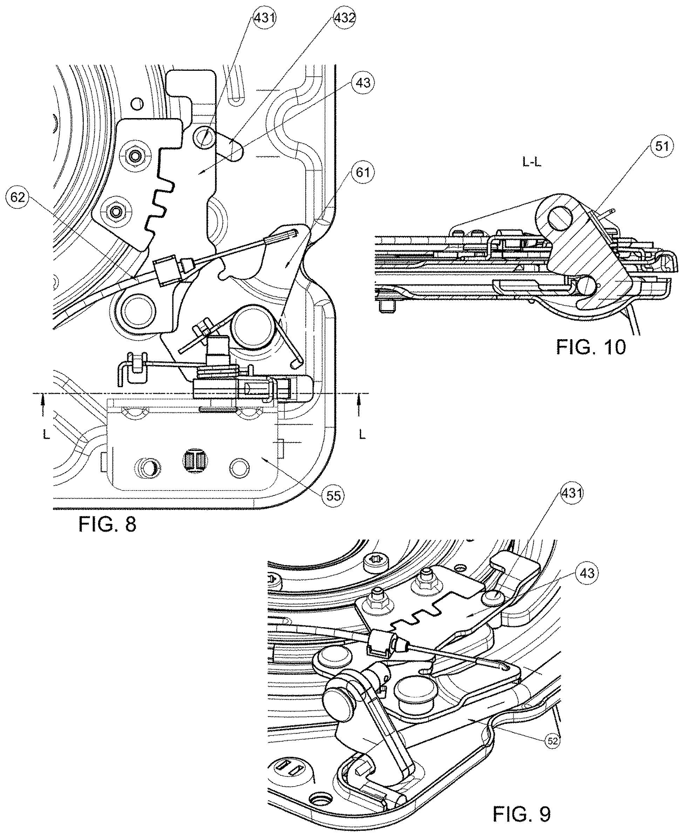

- Figure 8 is the same view as Figure 5, with the rotary device in a second operating state, i.e. locked;
- Figure 9 is the same view as Figure 6, with the rotary device in the second operating state;
- Figure 10 is the same view as Figure 7, with the rotary device in the second operating state;

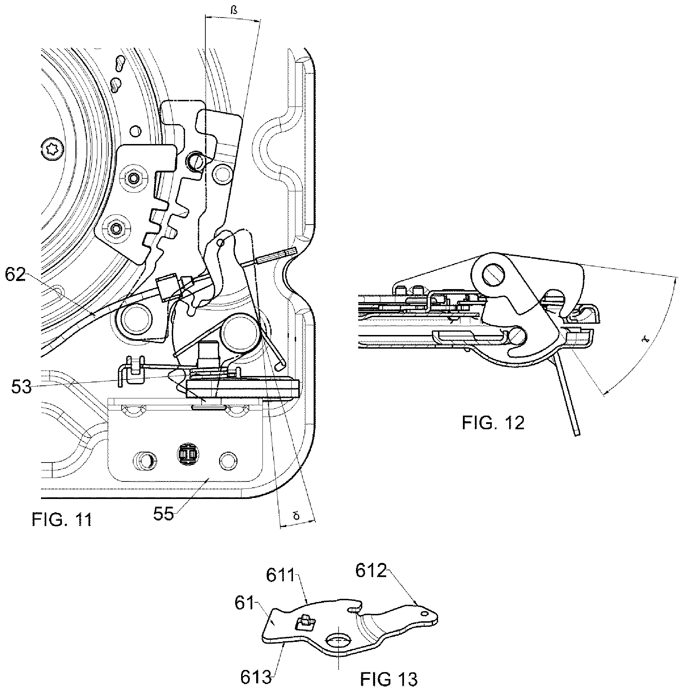

- Figure 11 is the same view as Figures 5 and 8, showing the movements of a lock member during rotation;
- Figure 12 is the same view of Figures 7 and 10, showing the movements of a safety member;
- Figure 13 is a perspective view of a cam as used in the device of Figure 1;

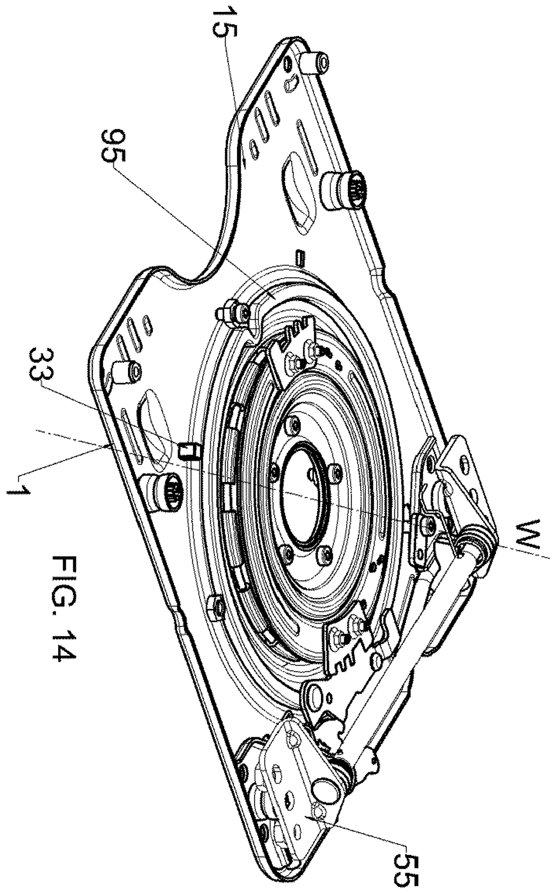

- Figure 14 is a perspective view of a part of the device of Figure 1; and
- Figures 15, 16 and 17 show the device of Figure 1 in three different operating states.

Referring to the numerals as used in the enclosed drawings there is disclosed a device 10 for rotating vehicle seats that comprises a first plate 1, or lower plate 1 and a second plate 2, or upper plate 2.

The first plate 1 and the second plate 2 extend on two substantially and/or generally parallel planes PI, P2.

The first plate1 has a first side 15, or top side, and a second side 16 or bottom side.

The second plate 2 has a first side 25, or top side and a second side 26, or bottom side.

The second side 16 of the first plate 1 and the first side 25 of the second plate 2 are opposite to each other.

The first side 15 of the first plate 1 and the second side 26 of the second plate 2 are facing each other.

The two plates 1, 2 of the device 10 may be made, for example, of cold-forged steel.

The second plate 2 is rotatably coupled to said first plate 1 and is able to rotate relative to the first plate 1, about an axis of rotation Z substantially and/or generally orthogonal to the planes P1, P2 on which the two plates 1, 2 extend.

The first plate is 1 is designed to be mechanically connected to the floor of a motor vehicle, for example by means of a support structure (not shown).

For example, the first plate 1 may be attached to the sliders of a conventional pair of parallel guides (not shown) which in turn are secured to the floor of the vehicle.

The second plate 2 is adapted to support a conventional seat (not shown) and is designed to allow fixation of such seat.

The seat that is mounted to the rotary device 10 may be a three-point restraint belt.

In the illustrated example, the two plates 1, 2 have an approximately quadrangular configuration with a central hole 11, 21.

In the illustrated example the two plates 1, 2 have substantially identical perimeter shapes with a central bend 17, 27 on one of the four perimeter sides.

The rotary device 10 may assume a first operating position such that the seat (not shown) will be oriented in the direction of travel of the vehicle.

In the accompanying drawings the direction of travel of the vehicle is indicated by the arrow "F".

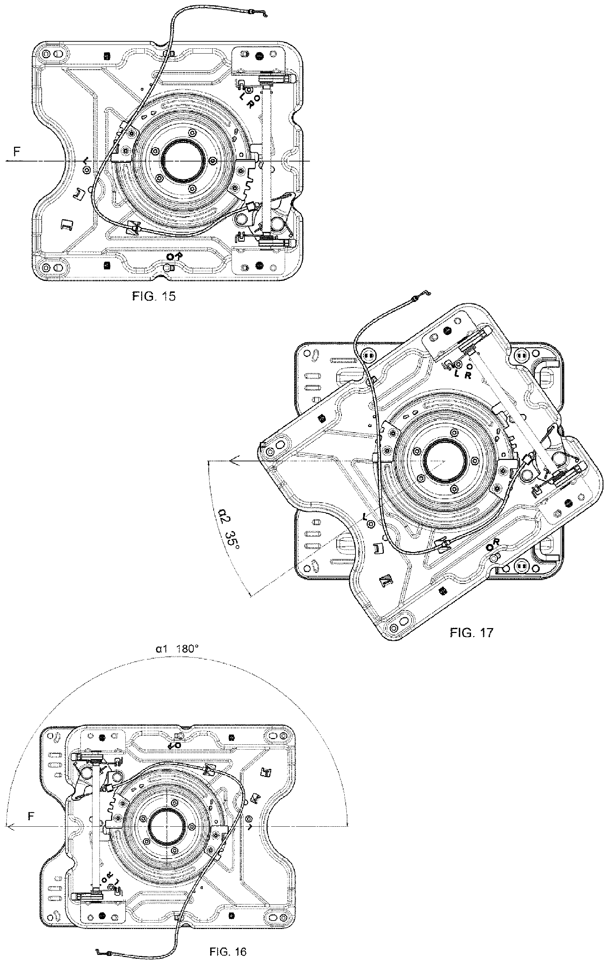

In the illustrated example, when the rotary device 10 assumes the first operating position, the two bends 17, 27 of the two plates 1, 2 are superposed (see Figure 15).

The rotary device 10 may assume a second operating position such that the seat (not shown) will be oriented in the direction opposite to the direction of travel of the vehicle.

When the rotary device 10 assumes this second angular arrangement the two bends 17, 27 of the two plates 1, 2 are diametrically opposite to each other (see Figure 16).

To move the device 10 from the first to the second operating positions the second plate 2 shall be rotated through 180° relative to the first plate 1.

A generally disk-shaped perforated metal element 8 is provided, with a central hole 87, formed, for example, by cold forging.

The generally disk-shaped element 8 comprises a first side, or top side 85, and a second side, or bottom side 86.

The second side 86 of the generally disk-shaped element 8 faces the first side 25 of the second plate 2.

The generally disk-shaped element 8 lies on top of the upper plate 2 and is rigidly coupled to the first plate 1 by means of threaded connections (as described below in greater detail) disposed proximate to the central hole 87.

A first bearing 91, as described below in greater detail, is interposed between the first plate 1 and the second plate 2.

Furthermore, a second bearing 92, as described in greater detail below, is interposed between the disk-shaped perforated element 8 and the second plate 2.

The two bearings 91, 92 allow the second plate 2 to rotate relative to the first plate 1.

Furthermore, due to the presence of the disk-shaped perforated element 8, the second plate 2 can rotate relative to the first plate 1, but cannot translate relative to the first plate 1.

In the illustrated example, the first bearing 91 and the second bearing 92 are axial plain bearings.

Namely, the first bearing 91 comprises a substantially and/or generally toroidal element 911, fitting between to opposed tracks, or seats 12, 22 formed in the first side 15 of the first plate 1 and the second side 26 of the second plate 2 respectively.

The second bearing 92 comprises a substantially and/or generally toroidal element 921, interposed between two opposed tracks, or seats 23, 83 formed in the first side 25 of the second plate 2 and the second side 86 of the disk 8 respectively.

In the illustrated example the substantially and/or generally toroidal elements 911, 921 have undercuts, arranged with a constant pitch, whereby portions having a greater cross section alternate with portions having a smaller cross section.

This solution affords a better fit of the elements 911, 921 in their seats, and compensates for any size and/or shape errors in the seats 12, 22 and 23, 83.

The substantially and/or generally toroidal elements 911, 921 are preferably made of a self-lubricating material, for example a PTFE (polytetrafluoroethylene) material.

Deep groove ball bearings (not shown) may be used as an alternative to the substantially and/or generally toroidal elements 911, 921.

A stroke limiter 31, 32, 33 is also provided, as described in greater detail below.

The stroke limiter 31, 32, 33 is adapted to adjust the rotation stroke α, about the axis Z, of the second plate 2 relative to the first plate 1.

In the illustrated example the stroke α of the second plate 2, relative to the first plate 1, is more than 180°, but less than 360°.

Furthermore, the stroke limiter 31, 32, 33 defines the orientation of the upper plate 2 at the two ends of the stroke α that correspond to the second and third operating positions.

With reference to the direction of travel F of the vehicle (corresponding to the first operating position as also shown in Fig. 15), the second plate 2 may rotate in a first direction (clockwise when viewed from the top), through an angle α1 of about 180° (corresponding to the second operating position as shown in Figure 17) and in the opposite direction (counterclockwise when viewed from the top), by an angle α2 of about 35° (corresponding to a third operating position as shown in Figure 17).

In the illustrated example the total rotation stroke α of the second plate 2 relative to the first plate 1, is therefore about 215°.

The rotation of the second plate 2 of the device 10 in the first direction of rotation, relative to the direction of travel F, up to the second operating position, can orient the seat toward the rear seats of the vehicle.

The rotation of the second plate 2 of the device 10 in the second direction of rotation relative to the direction of travel F, up to the third operating position, can orient the seat toward the door of the vehicle to facilitate entry and exit into and out of the vehicle.

This feature is particularly useful for people with impaired mobility.

As viewed from the top, if the device 10 is intended to be used for driver seat of a left-hand-drive vehicle, the second plate 2 will be able to rotate 35° clockwise, to orient the seat toward the door of the driver, and 180° clockwise, to orient the seat toward the rear seats.

A lock member 4 is also provided, as described in greater detail below, to lock the rotation of the second plate 2 relative to the first plate 1 in the first and the second operating positions, i.e. is in the two angular positions at 180° from each other, for the vehicle seat to be oriented in the direction of travel F of the vehicle and in the direction opposite to the direction of travel F.

The actuation of the lock member 4 does not require the relative distance between the first and the second plates 1, 2 to be changed.

In other words, the second plate 2 must not necessarily be lifted or lowered to unlock the lock member and rotate the seat.

Since the rotation of the second plate 2 can be locked/unlocked without without previously translating the second plate along the axis of rotation, the device 10 is more easily operated.

The previously mentioned stroke limiter 31, 32, 33 defines the extreme angular positions of the seat.

In the illustrated embodiment, when the second plate 2 is in the third operating position (with the seat oriented toward the door of the motor vehicle), the lock member 4 of the upper plate 2 is disabled.

This choice is preferred for cost reasons.

In an alternative embodiment, not shown, the lock member 4 may stop the rotation of the plate 2 also when the device 10 is in the third operating position.

The reference number 5 indicates a safety member for mutually connecting together the first and the second plates 1, 2 when the second plate 2 is in the first operating positions, i.e. is with the seat oriented in the direction of travel F of the vehicle.

In the illustrated example, the a safety member 5 only operates when the relative rotation between the two plates 1, 2 is locked (i.e. when the lock member 4 is enabled) and the device 10 is in its first operating position (with the seat oriented in the direction of travel of the vehicle).

As more clearly explained below, when the device 10 is not in its first operating position, the safety member 5 is disabled.

The safety member 5 is distinct from the lock member 4.

In the illustrated embodiment, when the device 10 is in the first operating condition, the bend 27 of the second plate 2 is superimposed on the bend 17 of the first plate 1.

The safety member 5 counteracts any force or mechanical moment that would tend to move the two plates 1, 2 away from each other, for example in case of front-end collision when, due to the inertia of the body of the person that sits on the seat important stresses will act to the rotary device 10.

Therefore, the safety member 5 will allow compliance with the safety standards in force, such as the European standard ECE R-14.

Namely, the safety member 5 counteracts any force applied through the two planes PI, P2 defined by two plates 1, 2 and every mechanical moment whose plane passes through the two planes PI, P2 defined by two plates 1, 2.

In short, while the safety member 5 allows the device 10 to undergo structural deformations, in case of impacts or rear-end collisions, it prevents detachment of the second plate 2 from the first plate 1 and limits the deformations of the device 10.

A mechanism 6, as described in greater detail below, is also provided in the device 10, to disengage at the same time the lock member 4 for locking the rotation of the second plate 2 relative to the first plate 1, and the safety member 5, which connects together the first and the second plates 1, 2, when the device 10 is in its first operating position.

When the device 10 is in its second operating position, with the seat facing in the direction opposite to the direction of travel, the actuation of the mechanism 6 will cause the disengagement of the rotation lock member 4 whereas the safety member 5 is already disabled.

To limit the stroke α of the second plate 2 relative to the first plate 1 two screws 31, 32 may be fitted into threaded through holes formed in the second plate 2.

The screws 31, 32 have a stem that projects downwards, to be oriented toward the first side 15 of the first plate 1.

The first plate 1 is equipped with a stop element 33 (in the illustrated example a jammed and welded pin) that projects out of the first side 15 of the first plate 1 and is adapted to alternately lock the first screw 31 and the second screw 32.

In the illustrated example the screw indicated by the reference number 31 defines, in cooperation with the stop element 33, the stroke α1 to orient the seat toward the rear seats.

In the illustrated example the screw indicated by the reference number 32 defines, in cooperation with the stop element 33, the stroke α2 to orient the seat toward the door of the vehicle.

Preferably the second plate 2 has four threaded holes, arranged symmetrically with respect to a WW axis extending through the center of the disk-shaped element 8 and the stop element 33 in such a manner that the screws 31, 32 may be placed in such an arrangement that the same device 10 can be used both for the driver seat and for the passenger seat next to it.

In the illustrated embodiment the lock member 4 for locking the rotation of the second plate 2 relative to the first plate 1 in the two distinct angular positions corresponding to the first and second operating positions, comprises a first toothed sector or comb 41 and a second toothed sector or comb 42, which are rigidly joined to the first plate 1, and a third toothed sector or comb 43 which is hinged to the upper side 25 of the second plate 2.

In the illustrated example, the first and the second toothed sectors 41, 42 are identical and generally extend along an arc of a circle, the third toothed sector 43 generally extends along an arc of a circle with the teeth arranged on the concave side.

The third toothed sector 43 is able to rotate about an axis of rotation Z', parallel to the axis of rotation Z of the second plate 2, between a first angular position or engagement position (with the first or second toothed sector 41, 42) and a second angular position or disengagement position (with respect to the first or second toothed sector 41, 42).

When the rotary device 10 is in its first or second operating position, the third toothed sector 43 can engage with the first toothed sector 41 or with the second toothed sector 42 respectively, to lock the rotation of the second plate 2 relative to the first plate 1.

By moving the third toothed sector 43 from first or second toothed sectors 41, 42 - i.e. by moving the third toothed sector 43 in its second angular position - the lock member 4 is disengaged or released.

In the illustrated example, the third toothed sector 43 will be able to reach its second angular position (position of disengagement from the first or second toothed sectors 41, 42) against elastic return means 63 (as described later in greater detail).

In the illustrated example, the first and the second toothed sectors 41, 42 are located in diametrically opposite positions with respect to the center of rotation of the device 10.

The third toothed sector 43 has a slider 431 (in the illustrated example a pin) which extends through a slot 432 formed in the upper plate 2.

In the illustrated example, the slot 432 extends along an arc of a circle.

The dimensions of the slot 432 define the angular stroke β of the third toothed sector 43.

The slider 431 projects out of the lower side 26 of the second plate 2 so as to also engage, in addition to the slot 432, a generally annular element 95 having the function of a guide.

In the illustrated example, the generally annular guide element 95 is hooked to the upper side 15 of the first plate 1.

The generally annular element 95 comprises two diametrically opposed bends 951, 952 disposed in the direction of travel F and in the direction opposite to the direction of travel F (to thereby define the first and second operating positions of the device 10).

The two bends 951, 952 divide the annular element into two arcs 953, 954, each having an angular amplitude of less than 180°.

When the slider 431 is at one of the two opposite loops 951, 952, the third toothed sector 43 may rotate away from and toward the first or second toothed sector 41, 42, to engage/disengage the third toothed sector 43 with/from the first or the second toothed sectors 41, 42.

When the slider 431 is at one of the two arcs 953, 954, the third toothed sector 43 is kept in its second angular position, against elastic return means 63.

In this embodiment, the first and the second toothed sectors 41, 42 of the lock member 4 are fixed to the generally disk-shaped perforated element 8 (for example by means of bolts).

The safety member 5 comprises at least one rotating hook 51 mechanically connected to a plate 2 and adapted to connect to a stop member 52 that is joined to the other plate 1.

In the illustrated embodiment, the safety member 5 for mechanically connecting together the first and the second plates 1, 2 (when the second plate 2 is oriented in its first operating position, i.e. the direction of travel F of the vehicle) comprises two rotating hooks 51, 51, which are adapted to pivot about an axis Y substantially and/or generally parallel to the plane P2 on which the second plate 2 extends.

The two hooks 51, 51 may pivot through an angle γ between a first angular position, or lowered position, in which they couple with two abutment members 52, 52 rigidly joined to the first plate 1, and a second angular position, or lifted position, in which they are disengaged from the abutment members 52, 52.

The two abutment elements 52, 52 project out of the first side 15 of the first plate 1.

The two rotating hooks 51, 51 are mechanically connected to the second plate 2 and may move away from the abutment members 52, 52 (i.e. may pivot from the first to the second angular positions) against elastic return means 53.

In the illustrated example the two abutment members 52 are the ends of a metal rod that is welded to the first side 15 of the first plate 1.

In the illustrated example, the two hooks 51, 51 are rigidly joined to a bar 54 (ensuring synchronous movement thereof).

The bar 54 has opposite ends hinged to two brackets 55 attached to the top side 25 of the second plate 2 (for example by means of welding and/or bolts).

The second plate 2 comprises two openings 24, 24 (in the illustrated example two parallel slots 24, 24) to enable rotation of the hooks 51, 51 that may thus fall below the plane of the second plate 2 to engagement of the abutment members 52, 52.

When the second plate 2 is in the second operating position (in the direction opposite to the direction of travel F of the vehicle) even though the two hooks 51, 51 fall below the plane of the second plate 2, they do not engage any abutment member.

The mechanism 6 for simultaneously actuating the disengagement of the lock member 4 (which locks the relative rotation between the first and second plates 1, 2 when the second plate is in the first or second angular position) and the disengagement of the safety member 5 (which counteracts the relative movement of the first and the second plates 1, 2 away from each other when the second plate 2 is in the first angular position) comprises an oscillating cam 61 that may be actuated via a steel wire 62 against a return spring 63.

The cam 61 is placed on the top side 25 of the second plate 2 and is able to rotate through an angle δ about an axis of rotation Z", parallel to the axis of rotation Z of the second plate 2, between a first work position, in which the lock member 4 is actuated and the safety member 5 is actuated, and a second work position, in which the lock member 4 and the safety member 5 are disengaged from each other.

The cam 61 is so designed as to control both the rotation of the third toothed sector 43 and the rotation of one of the two hooks 51, 51 (and as a result also the rotation of the other hook 51).

In the illustrated embodiment, the rocker cam 61 has a first lobe 611 and a second lobe 612 which act on third toothed sector 43 and a third lobe 613 that acts on one of the two hook 51 (and as a result on the other hook 51 that is connected to the first hook 51 by means of the bar 54).

The shape of the first and second lobes 611, 612 mates the shape of a portion of the third toothed sector 43, so that the cam 61 will be able to control both movements of the third toothed sector 43.

The third lobe 613 has a shape that is adapted to control the lifting movement of the hook 51, which may then move back to its first operating position due to the presence of the return springs 53.

The operation of the device 10 for rotating the seat is as follows.

At first, the device 10 is oriented in the direction of travel F of the vehicle, i.e. is in its first operating position (see figure 15).

By pulling the cable 62 against the return springs 53, 53, 63, the rocker cam 61 is rotated and controls both the movement of the third toothed sector 43 away from the first toothed sector 41 and the movement of the hooks 51, 51 away from the abutment members 52, 52 of the first plate 1.

As viewed from the top, the direction of rotation of the cam 61 is counterclockwise.

Once the lock member 4 for locking the rotation of the second plate 2 and the safety member 5 have been disengaged, the second plate 2 may be rotated relative to the first plate 1 about the axis Z.

The second plate 2 may rotate in one direction until the seat is oriented toward the rear seats of the vehicle (through about 180° until it reaches the second operating position, as shown in figure 16) or in the opposite direction until the seat is oriented toward the door (through about 35° until it reaches the third operating condition as shown in figure 17).

As the second plate 2 rotates toward the second operating position of the device 10, the slider 431 is maintained in its second angular positions by one of the two arcs 953, 954 of the guide 95.

As a result, the third angular sector 43 remains in its second (disengagement) angular position and forces the cam 61 to remain in its second angular positions, despite the returning action of the resilient means 63.

The cam 61, which is located in its second angular position, forces the hooks 51, 51 to remain in the lifted position, despite the action of the return springs 53, 53.

Once the second plate 2 has reached the second operating position, the slider 431 of the third toothed sector 43 reaches the bend 952 of the guide 95.

When the slider 431 reaches the bend 952, the return spring 63 which acts on the cam 61 causes the cam 61 to move back to its first angular position and then the third toothed sector 43 to move back to its first operating position (to thereby engage the second toothed sectors 42).

Simultaneously, the hooks 51, 51, under the action of the return springs 53, 53 move downwards, but without engaging any abutment member.

The two angular positions in which the second plate 2 may be locked correspond to the direction of travel F of the vehicle and to the direction opposite to the direction of travel (see Figures 15 and 16).

As the cable 62 is actuated again, the second plate may be moved to the normal condition, i.e. is with the seat oriented in the direction F of travel of the vehicle.

When the second toothed sector 42 reaches the third toothed sector 43, the return action of the springs 53, 53 causes the third toothed sector 43 to rotate until it engages the second toothed sector 42.

By pulling the cable 62 again against the return springs 53, 53, 63, the device 10 may be also rotated in the reverse direction, to orient the seat toward the door of the vehicle.

The arc 953, 954 of the guide 95 causes the lock member 4 to remain disengaged and that the hooks 51, 51 remain in the lifted position.

## Claims

1. A device (10) for rotating vehicle seats, comprising
a) a first plate (1) or lower plate, which is designed to be connected to the floor of a vehicle;
b) a second plate (1) or upper plate, for supporting a seat;
b1) wherein said first and second plates (1, 2) extend on two substantially and/or generally parallel planes (PI, P2);
b2) wherein said second plate (2) is rotatably coupled to said first plate (1) and can rotate relative to said first plate (1) about an axis of rotation (Z) that is substantially and/or generally orthogonal to said planes (P1, P2);
c) a rotation lock member (4) for locking the rotation of said second plate (2) relative to said first plate (1) in first and second operating positions;
c1) wherein the actuation of said lock member does not change the distance between said first and said second plates (1, 2);
**characterized in that** it includes
c) a stroke limiter (31, 32, 33) for adjusting the rotation stroke α of said second plate (2) relative to said first plate (1) about said axis of rotation (Z), said stroke being 180°≤α<360°;
e) a safety member (5) for mechanically connecting said first and said second plates (1, 2) to each other, when said second plate (2) is in said first operating position relative to said first plate (1), to oppose a force that would move said two plates (1, 2) away from each other;
e1) said safety member (5) comprising at least one rotating hook (51) mechanically connected to a plate (2; 1) and adapted to connect to a stop member (52) that is joined to the other of said two plates (1; 2).
f) a mechanism (6) for simultaneously actuating the release of said rotation lock member (4), which prevents said first and second plates (1, 2) from rotating relative to each other, and said safety member (5) that opposes the movement of said first and second plates (1, 2) away from each other.

2. A device as claimed in any of the preceding claims, wherein said mechanism (6) for simultaneously actuating the release of said member (4) for locking the relative rotation of said first and second plates (1, 2), and said safety member (5) for coupling said first and second plates (1, 2) together comprises
f1) a rocker cam (61), which is adapted to rotate about an axis (Z") parallel to said axis of rotation (Z) of said second plate (2), said rocker cam (61) being designed to be actuated via a cable (62) against a return spring (63).

3. A device as claimed in claim 1 or 2, wherein said lock member (4) for locking the rotation of said second plate (2) relative to said first plate (1) in two distinct operating positions comprises
d1) a first toothed sector or comb (41), rigidly joined to said first plate (1);
d2) a second toothed sector or comb (42), rigidly joined to said first plate (1);
d3) a third toothed sector or comb (43), hinged to said second plate (2) and adapted to rotate about an axis (Z') parallel to the axis of rotation (Z), said third toothed sector (43) being adapted to alternately mate with said first or second toothed sector (41, 43), the rotation of said third toothed sector (43) being actuated by said rocker arm (61), which is triggered by said return spring (63), said lock member (4) comprising a slider (431), rigidly joined to said third toothed sector (43), said slider (431) cooperating with a guide member (95) which is designed to allow the rotation of said device (10) to be only locked in said two operating positions.

4. A device as claimed in claim 1, 2 or 3, wherein said safety member (5) for coupling said first and second plates (1, 2) together when they are in said first angular position, comprises
two rotating couplers (51) connected to said second plate (2), and adapted to be coupled to a stop member (52), rigidly joined to said first plate (1), said two rotating couplers (51) being adapted to be actuated by a rocker cam (61) against at least one return spring (53).

5. A device as claimed in any of the preceding claims, wherein said stroke limiter (31, 32, 33) for adjusting the rotation stroke α of said second plate (2) relative to said first plate (1) comprises a pair of screws (31, 32) connected to said second plate (2) and a stop member (33) connected to said first plate (1), said stop member (33) being adapted to alternately lock the first screw (31) and the second screw (32).
